# EUROPÄISCHE PATENTSCHRIFT

(11) **EP 2 353 218 B1**
(45) Veröffentlichungstag und Bekanntmachung des Hinweises auf die Patenterteilung: **26.02.2014**
(21) Anmeldenummer: 09740116.0
(22) Anmeldetag: 20.10.2009
(51) Int. Cl.: H02P 5/50, B23Q 5/10, G05B 19/416, G05B 19/29, G05B 19/414, H02P 5/69

(54) **REGLERSTRUKTUR FÜR MEHRERE MECHANISCH GEKOPPELTE ANTRIEBSEINHEITEN**
CONTROLLER STRUCTURE FOR MULTIPLE MECHANICALLY COUPLED DRIVE UNITS
STRUCTURE DE RÉGULATEUR POUR PLUSIEURS UNITÉS D'ENTRAÎNEMENT ACCOUPLÉES MÉCANIQUEMENT

(30) Priorität: 04.12.2008 DE 102008044341
(43) Veröffentlichungstag der Anmeldung: 10.08.2011
(73) Patentinhaber: Dr. Johannes Heidenhain GmbH, 83301 Traunreut (DE)
(72) Erfinder: SCHÖNHUBER, Josef, 83365 Nußdorf/Aiging (DE); KOHLER, Frieder, 83362 Lauter (DE); MAIER, Stefan, 83339 Chieming (DE)
(86) Internationale Anmeldenummer: PCT/EP2009/063731
(87) Internationale Veröffentlichungsnummer: WO 2010/063512

(56) Entgegenhaltungen:
- EP-A1- 1 742 128
- DE-A1- 10 051 638
- DE-A1- 19 616 855
- DE-C1- 4 409 823
- DE-C2- 19 527 199
- US-A1- 2003 222 615

## Beschreibung

Die Erfindung betrifft eine Reglerstruktur für mehrere mechanisch gekoppelte Antriebseinheiten. Solche Anordnungen treten auf, wenn beispielsweise ein schwerer Maschinentisch mit mehreren Antrieben in einer Richtung bewegt werden soll. Dann müssen diese Antriebseinheiten so angesteuert werden, dass die Last gleichmäßig auf alle Antriebseinheiten verteilt wird, ohne dass es zu unzulässigen Verspannungen zwischen den Antrieben kommt.

Aus der DE 4409823 C1 ist ein Verbund aus mehreren Antrieben bekannt, der zentral angesteuert wird. Für jeden Antrieb kommt hier ein eigenes Positionsmessgerät und ein eigener Lageregler zum Einsatz.

Aus der EP 0 704 962 B1 ist eine Reglerstruktur bekannt, mit der sich eine Vielzahl von Antrieben synchronisiert betreiben lässt. Die hier vorgeschlagene Reglerstruktur verwendet jeweils einen gemeinsamen Lage- und Drehzahlregler für alle beteiligten Antriebseinheiten. Diese Reglerstruktur hat den Nachteil, dass unsymmetrische Störungen bezüglich des Drehmoments nur symmetrisch ausgeregelt werden können, da es nur einen Drehzahlregler gibt.

Aus der DE 19527199 C2 ist es zur Synchronisation von Druckwalzen bekannt, mehrere Antriebe mit einem einzigen Positionsmessgerät zu betreiben, wobei jede Antriebsachse über einen eigenen Geschwindigkeitsregler verfügt.

Aufgabe der Erfindung ist es, eine Regelungsstruktur für mehrere mechanisch gekoppelte Antriebseinheiten zur Verfügung zu stellen, die möglichst flexibel konfigurierbar ist, und die somit an verschiedene Anwendungen leicht angepasst werden kann. Hierzu ist ein modulares Konzept von Vorteil, bei dem einzelne Antriebseinheiten und deren unmittelbar zugeordnete Reglerstrukturen in einfacher Weise zu einem Antriebsverbund zusammengeschaltet werden können.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird eine Reglerstruktur für mehr als zwei mechanisch an ein beweglichen Elements und einen Lageregler zur Berechnung einer Sollgeschwindigkeit aus einer Soll-Lage und der Ist-Lage auf, wobei das Positionsmessgerät und der Lageregler allen Antriebseinheiten gemeinsam dienen. Jede Antriebseinheit verfügt aber jeweils über einen eigenen Geschwindigkeitsregler.

Die erfindungsgemäße Reglerstruktur ist für Anwendungen geeignet, in denen mehr als zwei Antriebseinheiten für den Vorschub eines beweglichen Elements in eine Richtung vorgesehen sind. Mit anderen Worten handelt es sich dabei um Maschinen, bei denen eine bewegliche Achse von mehr als zwei Antrieben gleichzeitig angetrieben wird.

Die aktuelle Position des beweglichen Elements wird dabei von einem einzigen Lagemessgerät erfasst und als Ist-Lage der Reglerstruktur zur Verfügung gestellt, die diesen mit einer Soll-Lage vergleicht und bei Abweichungen durch geeignete Ansteuerung aller Antriebseinheiten die Ist-Lage auf die Soll-Lage regelt.

Die Reglerstruktur weist hierfür einen für alle Antriebseinheiten gemeinsamen Lageregler auf, der aus der Abweichung zwischen Ist-Lage und Soll-Lage eine Soll-Geschwindigkeit bestimmt, der den einzelnen Antrieben vorgegeben wird.

Jede Antriebseinheit verfügt über einen eigenen Geschwindigkeitsregler, der die Soll-Geschwindigkeit des gemeinsamen Lagereglers sowie die Ist-Geschwindigkeit erhält und daraus einen Soll-Strom bestimmt. Dieser Soll-Strom wird in einem Stromregler in Ansteuersignale für den eigentlichen Motor umgesetzt.

Weitere Vorteile sowie Einzelheiten der vorliegenden Erfindung ergeben sich aus der nachfolgenden Beschreibung verschiedener Ausführungsformen anhand der Figuren. Dabei zeigt
- Figur 1: eine Reglerstruktur für drei mechanisch gekoppelte Antriebseinheiten,
- Figur 2: eine Reglerstruktur für vier mechanisch gekoppelte Antriebseinheiten,
- Figur 3: ein Detail der Reglerstrukturen für mehrere mechanisch gekoppelte Antriebseinheiten.

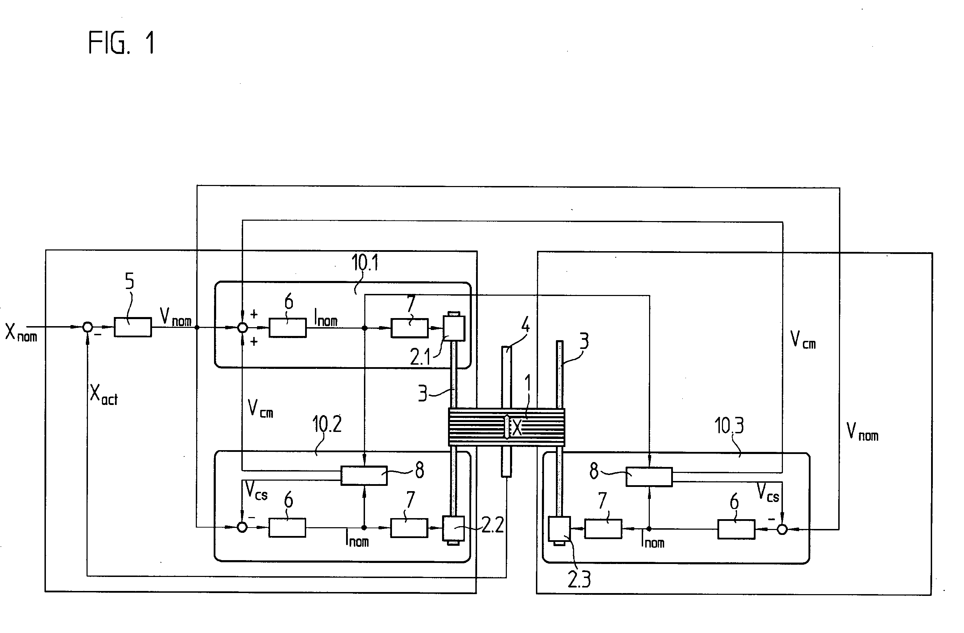

In der Figur 1 ist ein bewegliches Element 1 oder genauer ein Tisch 1 dargestellt, der mittels einer Linearachse in eine Richtung X beweglich ist. Hierzu wird der Tisch 1 mittels zweier Spindeln 3 angetrieben, die parallel zur Richtung X angeordnet sind. Eine der beiden Spindeln 3 wird von zwei Motoren 2.1 und 2.2 angetrieben, die andere Spindel von einem einzigen Motor 2.3. Diese Motoren sind Bestandteil von Antriebseinheiten 10.1, 10.2 und 10.3. Eine solche Konfiguration kann sinnvoll sein, wenn die zu bewegende Masse ungleichmäßig angeordnet ist.

Da diese Antriebseinheiten sehr ähnlich aufgebaut sind, und beispielsweise jeweils einen Geschwindigkeitsregler 6, einen Stromregler 7 und einen Motor 2 enthalten, werden im Folgenden Bezugszeichen mit nachgestelltem Index nur dann verwendet, wenn ein Bestandteil einer speziellen Antriebseinheit gemeint ist, also z.B. für den Motor 2.2 der Antriebseinheit 10.2. Ansonsten werden Bezugszeichen ohne Index verwendet, also z.B. für die Motoren 2 der Antriebseinheiten 10.

Die aktuelle Position des Tisches 1 wird von einem einzigen Lagemessgerät 4 erfasst, dessen Positionswert als Ist-Lage Xact zur Regelung in allen Antriebseinheiten 10 herangezogen wird. Hierzu wird die Ist-Lage Xact von einer Soll-Lage Xnom abgezogen und einem Lageregler 5 zugeführt, der daraus in bekannter Weise eine für alle Antriebseinheiten 10 gültige Soll-Geschwindigkeit Vnom generiert.

Die Soll-Geschwindigkeit Vnom wird nun jeder der Antriebseinheiten 10 zugeleitet, und dort einem in jeder Antriebseinheit 10 vorhandenen Geschwindigkeitsregler 6 zugeführt. Zuvor wird von der Soll-Geschwindigkeit Vnom die aktuelle Ist-Geschwindigkeit Vact abgezogen, die beispielsweise durch Ableitung der Ist-Lage erzeugt werden kann. Diese Differenzbildung ist fachüblich und in den Figuren nicht dargestellt, um die Details der Erfindung besser zeigen zu können. Der Geschwindigkeitsregler 6 kann auch als Drehzahlregler bezeichnet werden, da die Drehzahl der Motoren 2 über die mechanische Ausführung mit der Geschwindigkeit des Tisches 1 verknüpft ist.

Jeder Drehzahlregler 6 erzeugt in bekannter Weise einen Soll-Strom Inom, der wie üblich einem in jeder Antriebseinheit 10 vorhandenen Stromregler 7 zugeführt wird. Auch hier ist die fachübliche Differenzbildung mit einem Ist-Strom nicht näher dargestellt. Die Stromregler 7 erzeugen Sollwerte für die Spannungen der einzelnen Motorphasen, um die Motoren 2 so anzutreiben, dass der Tisch 1 letztlich in seine von außen vorgegebene Soll-Lage Xnom bewegt wird.

Um nun sicher zu stellen, dass der Tisch 1 gleichmäßig angetrieben wird und nicht verkantet, ist die Antriebseinheit 10.1 als Master ausgelegt, während die Antriebseinheiten 10.2 und 10.3 als Slaves zu diesem Master 10.1 ausgelegt sind.

Dies bedeutet, dass die Antriebseinheiten 10.2 und 10.3 jeweils über einen Momenten-Master-Slave Regler 8, im Folgenden kurz als MMS-Regler 8 bezeichnet, aufweisen, Die MMS-Regler 8 sind also den Slaves zugeordnet, der Master (also die Antriebseinheit 10.1) weist keinen MMS-Regler 8 auf.

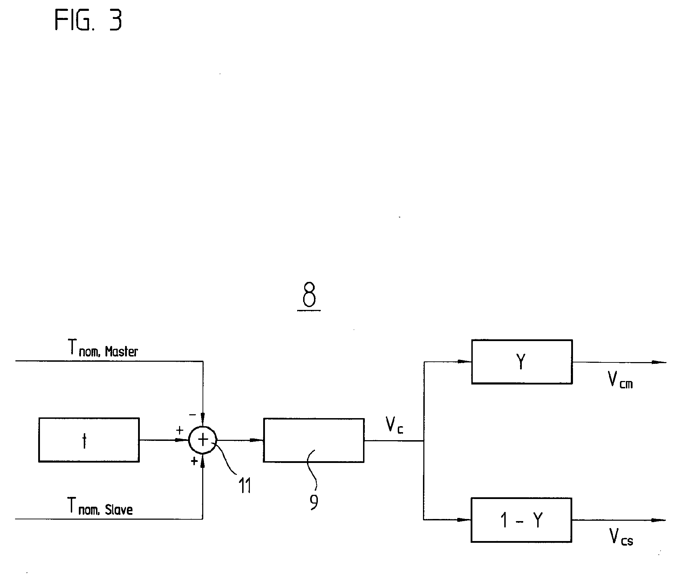

Die genaue Struktur eines MMS-Reglers 8 wird anhand der Figur 3 weiter unten noch näher erläutert. Hier soll zunächst nur die grundlegende Funktionsweise erläutert werden. Der MMS-Regler 8 eines Slaves erhält als Eingangswerte die Soll-Ströme Inom seines Slaves und von dessen Master. Über die jeweilige Motorkonstante des jeweiligen Motors 2 ist dieser Soll-Strom Inom mit dem Drehmoment des jeweiligen Motors verknüpft. Hieraus berechnet der MMS-Regler 8 jeweils einen Korrekturwert Vcm, Vcs für die Sollgeschwindigkeit von Master bzw. Slave, die auf die jeweiligen Sollgeschwindigkeiten mit unterschiedlichem Vorzeichen aufgeschaltet werden, wobei Vorzeichen lediglich auf Konventionen beruhen. Praktisch bedeutet dies, dass der MMS-Regler 8 z.B. den Master etwas beschleunigen und den Slave etwas bremsen kann, um beide Antriebseinheiten bezüglich ihres Drehmoments zu synchronisieren.

Da im vorliegenden Beispiel die Antriebseinheiten 10.2 und 10.3 als Slaves für den Master 10.1 arbeiten, erhält der Master sowohl vom MMS-Regler 8.2 als auch vom MMS-Regler 8.3 jeweils einen Korrekturwert Vcm für die Sollgeschwindigkeit Vnom. Die Zahl der einzelnen Slaves kann wie man sieht auf einfache Weise erhöht werden. Für jeden weiteren Slave erhält in dieser Reglertopologie der Master einen Korrekturwert Vcm für die Sollgeschwindigkeit.

Gemäß diesem ersten Ausführungsbeispiel ist die Reglerstruktur also durch lediglich zwei verschiedene Module oder Typen von Antriebseinheiten aufgebaut, nämlich aus einem Master und mehreren Slaves. Master und Slaves erhalten eine gemeinsame Sollgeschwindigkeit Vnom von einem gemeinsamen Lageregler 5, der von einem einzigen gemeinsamen Lagemessgerät 4 mit der Ist-Lage Xact versorgt wird. Master und Slaves enthalten dann die weiteren Elemente eines kaskadierten Regelkreises jeweils selbst, also hier den Geschwindigkeitsregler 6 und den Stromregler 7. Jedem Slave ist außerdem ein MMS-Regler 8 zugeordnet, der wie beschrieben für die Koordination zwischen jedem Master-Slave Paar sorgt, indem er Korrekturwerte Vcm und Vcs für die Sollgeschwindigkeit Vnom von Master und Slave erzeugt, so dass unterschiedliche Drehmomente ausgeglichen werden.

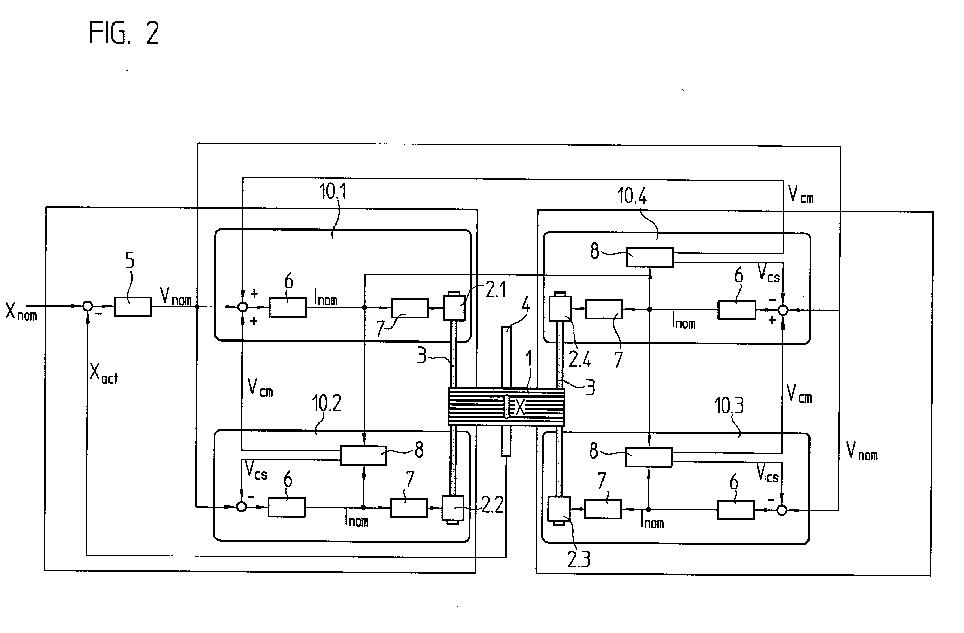

Figur 2 zeigt ein weiteres Ausführungsbeispiel mit einer um ein weiteres Modul bzw. um eine weitere Konfigurationsmöglichkeit für eine Antriebseinheit 10 ergänzten Reglerstruktur: Ein Verbund eines Masters mit einem oder mehreren Slaves wie im ersten Ausführungsbeispiel kann selbst nach außen als Slave gegenüber einem übergeordneten Master auftreten.

In der Figur 2 ist eine der Figur 1 sehr ähnliche Anordnung gezeigt, die einzelnen bereits erklärten Bestandteile werden nicht nochmals erläutert, vielmehr sollen die Unterschiede aufgezeigt werden.

Gemäß diesem Ausführungsbeispiel sind nun vier Antriebseinheiten 10 zum Bewegen des Tisches 1 vorgesehen. Die neu hinzugekommene Antriebseinheit 10.4 ist aber nun nicht als zusätzlicher Slave zum Master 10.1 konfiguriert - dies entspräche einer Konfiguration nach Art des ersten Ausführungsbeispiels. Vielmehr fungiert die Antriebseinheit 10.4 als Master für die Antriebseinheit 10.3. Der MMS-Regler 8.3 der Antriebseinheit 10.3 ist also entsprechend zwischen die Antriebseinheiten 10.3 und 10.4 geschaltet. Er errechnet basierend auf den Soll-Strömen Inom dieser beiden Antriebseinheiten Korrekturwerte Vcm und Vcs für die Soll-Geschwindigkeit Vnom der Antriebseinheiten 10.4 bzw. 10.3.

Die Antriebseinheiten 10.3 und 10.4 arbeiten also als Master und Slave zusammen. Dieser Verbund aus Master und Slave tritt aber nun zusätzlich gegenüber der als Master konfigurierten Antriebseinheit 10.1 als Slave auf. Deswegen weist die Antriebseinheit 10.4 einen MMS-Regler 8.4 auf, obwohl sie gegenüber der Antriebseinheit 10.3 als Master fungiert. Der MMS-Regler 8.4 errechnet basierend auf den Soll-Strömen Inom der Antriebseinheiten 10.1 und 10.4 Korrekturwerte Vcm und Vcs für die Soll-Geschwindigkeit Vnom der Antriebseinheiten 10.1 bzw. 10.4.

Die Antriebseinheit 10.1 ist also einerseits Master für den Slave 10.2 wie im ersten Ausführungsbeispiel. Zusätzlich ist die Antriebseinheit 10.1 auch Master gegenüber dem Master-Slave Verbund aus den Antriebseinheiten 10.4 und 10.3.

Die Antriebseinheit 10.4 ist sowohl Master für die Antriebseinheit 10.3, als auch Slave für die Antriebseinheit 10.1.

Gegenüber dem ersten Ausführungsbeispiel der Figur 1 ist also eine weitere Konfigurationsmöglichkeit für die Antriebseinheiten 10 hinzugekommen, nämlich der Verbund einer Antriebseinheit 10.4 als Master mit einer Antriebseinheit 10.3 als Slave. Dieser Verbund könnte weitere als Slave zum Master 10.4 konfigurierte Antriebseinheiten 10 enthalten. Die Antriebseinheit 10.4 dieses Verbunds tritt außerdem als Slave zum übergeordneten Master 10.1 auf. Sie weist deshalb trotz ihrer Rolle als Master gegenüber Slave 10.3 einen MMS-Regler 8 auf.

Allgemein kann man festhalten, dass nur die Antriebseinheit 10.1, die als übergeordneter Master fungiert, keinen MMS-Regler 8 aufweist. Alle anderen Antriebseinheiten 10.2, 10.3, 10.4 weisen einen MMS-Regler 8 auf, da sie entweder einfache Slaves zu einem Master, oder Master in einem Verbund mit einem oder mehreren Slaves und gleichzeitig Slave zu einem übergeordneten Master sind.

Da es letztlich nur einen übergeordneten Master gegeben kann, weist genau eine Antriebseinheit 10.1 keinen MMS-Regler 8 auf, alle anderen Antriebseinheiten 10.2, 10.3, 10.4 weisen einen MMS-Regler 8 auf.

Figur 3 zeigt einen solchen MMS-Regler 8 im Detail. Die aus den Soll-Strömen von Master und Slave gebildeten Soll-Drehmomente Tnom,Master bzw. Tnom,Slave werden an der Additionsstelle 11 voneinander abgezogen und bilden so ein Maß für die gegenseitige Verspannung von Master und Slave. Es ist über einen Parameter t, der der Differenz zusätzlich aufgeschaltet ist, außerdem möglich, eine Soll-Vorspannung zu definieren, um Master und Slave mechanisch gegeneinander vorzuspannen. So können z.B. zwei Zahnräder, die gemeinsam eine Zahnstange antreiben, gegeneinander verspannt werden, um die Mechanik ohne Zahnflankenwechsel und damit spielfrei zu betreiben.

Der an der Additionsstelle 11 gebildete Wert wird in einem Drehmomentregler 9 in einen Geschwindigkeitskorrekturwert Vc umgerechnet. Dieser Korrekturwert wird zur Soll-Geschwindigkeit des Masters addiert und von der Soll-Geschwindigkeit des Slaves abgezogen, wie in den vorhergehenden Figuren dargestellt.

Es ist außerdem möglich, den Geschwindigkeitskorrekturwert asymmetrisch aufzuteilen. Hierzu wird der Korrekturwert mit einem Parameter y zwischen 0 und 2 multipliziert, um den Korrekturwert Vcm für den Master zu bilden, und mit (2 - y) multipliziert, um den Korrekturwert Vcs für den Slave zu bestimmen. Für y = 1 wird der Korrekturwert gleich aufgeteilt, dann gilt Vcm = Vcs = Vc. Eine unsymmetrische Aufteilung kann sinnvoll sein, wenn z.B. das Lagemessgerät 4 nicht wie in den Figuren 1 und 2 dargestellt mittig zwischen den Antrieben angeordnet ist.

Die MMS-Regler 8 müssen nicht unbedingt basierend auf den Soll-Strömen Inom der jeweiligen Antriebseinheiten 10 arbeiten. Auch die Ist-Ströme sind ein geeignetes Maß für das jeweilige Drehmoment, da Soll- und Ist-Ströme in der Praxis nicht für längere Zeit stark voneinander abweichen werden.

## Patentansprüche

1. Reglerstruktur für mehr als zwei mechanisch an ein bewegliches Element (1) gekoppelte Antriebseinheiten (10), wobei die Reglerstruktur ein einziges Positionsmessgerät (2) zur Feststellung einer Ist-Lage (Xact) des beweglichen Elements (1) und einen Lageregler (5) zur Berechnung einer für alle Antriebseinheiten (10) gültigen Soll-Geschwindigkeit (Vnom) aus einer Soll-Lage (Xnom) und der Ist-Lage (Xact) aufweist, und wobei das Positionsmessgerät (2) und der Lageregler (5) allen Antriebseinheiten (10) gemeinsam dienen, wobei jede Antriebseinheit (10) jeweils über einen eigenen Geschwindigkeitsregler (6) verfügt, **dadurch gekennzeichnet, dass** eine Antriebseinheit (10.1) als übergeordneter Master konfiguriert ist, und dass die diesem Master untergeordneten Antriebseinheiten (10.2) als Slaves konfiguriert sind und einen MMS-Regler (8) aufweisen, der jeweils einen Geschwindigkeitskorrekturwert (Vcm, Vcs) für Master (10.1) und Slave (10.2) zur Verfügung stellt.

2. Reglerstruktur nach Anspruch 1, **dadurch gekennzeichnet, dass** der MMS-Regler (8) basierend auf Soll-Strömen (Inom) oder Ist-Strömen, und damit basierend auf Drehmomente von Master (10.1) und Slave (10.2) Geschwindigkeitskorrekturwerte (Vcm, Vcs) für Master (10.1) und Slave (10.2) ermittelt.

3. Reglerstruktur nach Anspruch 1 oder 2, **dadurch gekennzeichnet, dass** über den MMS-Regler (8) eine mechanische Soll-Vorspannung (t) zwischen Master (10.1) und Slave (10.2) parametrierbar ist.

4. Reglerstruktur nach einem der Ansprüche 1 - 3, **dadurch gekennzeichnet, dass** die Geschwindigkeitskorrekturwerte (Vcm, Vcs) unterschiedliche Vorzeichen aufweisen.

5. Reglerstruktur nach einem der Ansprüche 1 - 4, **dadurch gekennzeichnet, dass** die Geschwindigkeitskorrekturwerte (Vcm, Vcs) unterschiedliche Beträge aufweisen, um eine notwendige Geschwindigkeitskorrektur zwischen Master (10.1) und Slave (10.2) asymmetrisch aufzuteilen.

6. Reglerstruktur nach einem der vorhergehenden Ansprüche, **dadurch gekennzeichnet, dass** wenigstens eine der Antriebseinheiten (10.4) sowohl als Master wenigstens einer weiteren Antriebseinheit (10.3) fungiert, als auch als Slave eines übergeordneten Masters (10.1).

7. Reglerstruktur nach Anspruch 6, **dadurch gekennzeichnet, dass** diese gleichzeitig als Master und Slave dienende Antriebseinheit (10.4) einen MMS-Regler (8.4) zum Abgleich mit dem übergeordneten Master (10.1) aufweist.

8. Reglerstruktur nach einem der vorhergehenden Ansprüche, **dadurch gekennzeichnet, dass** bis auf den übergeordneten Master (10.1) jede Antriebseinheit (10.2, 10.3, 10.4) einen MMS-Regler (8.2, 8.3, 8.4) aufweist.

## Claims

1. Controller structure for more than two drive units (10) which are mechanically coupled to a moving element (1), wherein the controller structure has a single position measuring device (2) for establishing an actual position (Xact) of the moving element (1) and has a position controller (5) for calculating a setpoint speed (Vnom), which is applicable to all of the drive units (10), from a setpoint position (Xnom) and the actual position (Xact), and wherein the position measuring device (2) and the position controller (5) serve all of the drive units (10) jointly, wherein each drive unit (10) has its own speed controller (6), **characterized in that** one drive unit (10.1) is configured as a superordinate master, and **in that** the drive units (10.2) which are subordinate to this master are configured as slaves and have an MMS controller (8) which provides a respective speed correction value (Vcm, Vcs) for the master (10.1) and the slave (10.2).

2. Controller structure according to Claim 1, **characterized in that** the MMS controller (8) determines speed correction values (Vcm, Vcs) for the master (10.1) and the slave (10.2) based on setpoint currents (Inom) or actual currents, and therefore based on torques of the master (10.1) and the slave (10.2).

3. Controller structure according to Claim 1 or 2, **characterized in that** a mechanical setpoint prestress (t) between the master (10.1) and the slave (10.2) can be parameterized by means of the MMS controller (8).

4. Controller structure according to one of Claims 1-3, **characterized in that** the speed correction values (Vcm, Vcs) have different algebraic signs.

5. Controller structure according to one of Claims 1-4, **characterized in that** the speed correction values (Vcm, Vcs) have different magnitudes, in order to asymmetrically divide a necessary speed correction between the master (10.1) and the slave (10.2).

6. Controller structure according to one of the preceding claims, **characterized in that** at least one of the drive units (10.4) functions both as a master of at least one further drive unit (10.3) and also as a slave of a superordinate master (10.1).

7. Controller structure according to Claim 6, **characterized in that** this drive unit (10.4), which serves simultaneously as a master and a slave, has an MMS controller (8.4) for matching with the superordinate master (10.1).

8. Controller structure according to one of the preceding claims, **characterized in that**, apart from the superordinate master (10.1), each drive unit (10.2, 10.3, 10.4) has an MMS controller (8.2, 8.3, 8.4).

## Revendications

1. Structure de régulateur pour plusieurs unités d'entraînement (10) accouplées mécaniquement à un élément mobile (1), la structure de régulateur comportant un unique appareil de mesure de position (2) servant à détecter une position réelle (Xact) de l'élément mobile (1) et un régulateur de palier de roulement (5) servant au calcul d'une vitesse théorique (Vnom) valide pour toutes les unités d'entraînement (10) à partir d'une position théorique (Xnom) et de la position réelle (Xact) et l'appareil de mesure de position (2) et le régulateur de palier de roulement (5) servant ensemble toutes les unités d'entraînement (10), chaque unité d'entraînement (10) disposant respectivement d'un régulateur de vitesse (6) propre, **caractérisée en ce qu'**une unité d'entraînement (10.1) prend la forme d'un maître supérieur et que les unités d'entraînement (10.2) subordonnées à ce maître prennent la forme d'esclaves et comportent un régulateur MMS (8) mettant respectivement à disposition une valeur de vitesse de correction (Vcm, Vcs) pour maître (10.1) et esclave (10.2).

2. Structure de régulateur selon la revendication 1, **caractérisée en ce que** le régulateur MMS (8) calcule les valeurs de vitesse de correction (Vcm, Vcs) pour maître (10.1) et esclave (10.2) sur la base des courants théoriques (Inom) ou des courants réels et ainsi sur la base de couples de rotation de maître (10.1) et d'esclave (10.2).

3. Structure de régulateur selon la revendication 1 ou 2, **caractérisée en ce qu'**une précontrainte théorique (t) mécanique entre maître (10.1) et esclave (10.2) est paramétrable via le régulateur MMS (8).

4. Structure de régulateur selon l'une quelconque des revendications 1 à 3, **caractérisée en ce que** les valeurs de vitesse de correction (Vcm, Vcs) présentent des signes différents.

5. Structure de régulateur selon l'une quelconque des revendications 1 à 4, **caractérisée en ce que** les valeurs de vitesse de correction (Vcm, Vcs) présentent des valeurs différentes, pour répartir asymétriquement la correction de vitesse nécessaire entre maître (10.1) et esclave (10.2).

6. Structure de régulateur selon l'une quelconque des revendications précédentes, **caractérisée en ce qu'**au moins une des unités d'entraînement (10.4) sert tant de maître d'au moins une unité d'entraînement (10.3) supplémentaire que d'esclave d'un maître supérieur (10.1).

7. Structure de régulateur selon la revendication 6, **caractérisée en ce que** cette unité d'entraînement (10.4) servant simultanément de maître et d'esclave comporte un régulateur MMS (8.4) permettant de réaliser un rééquilibrage par rapport au maître supérieur (10.1).

8. Structure de régulateur selon l'une quelconque des revendications précédentes, **caractérisée en ce que** chaque unité d'entraînement (10.2, 10.3, 10.4) comporte un régulateur MMS (8.2, 8.3, 8.4) jusqu'au maître supérieur (10.1).
